# EUROPÄISCHE PATENTSCHRIFT

(11) **EP 1 325 531 B1**
(45) Veröffentlichungstag und Bekanntmachung des Hinweises auf die Patenterteilung: **09.06.2004**
(21) Anmeldenummer: 01978108.7
(22) Anmeldetag: 10.09.2001
(51) Int. Cl.: H01M 8/04

(54) **VERFAHREN ZUM ÜBERWACHEN DES MEDIENAUSTRITTS AUS EINER BRENNSTOFFZELLE UND BRENNSTOFFZELLENANLAGE**
METHOD FOR MONITORING THE DISCHARGE OF MEDIA OUT OF A FUEL CELL, AND A FUEL CELL SYSTEM
PROCEDE SERVANT A SURVEILLER LES FUITES DE SUBSTANCES D'UNE PILE A COMBUSTIBLE ET INSTALLATION A PILES A COMBUSTIBLE

(30) Priorität: 22.09.2000 DE 10047173
(43) Veröffentlichungstag der Anmeldung: 09.07.2003
(73) Patentinhaber: SIEMENS AKTIENGESELLSCHAFT, 80333 München (DE)
(72) Erfinder: ILLNER, Dieter, 91054 Erlangen (DE); MEHLTRETTER, Igor, 91054 Buckenhof (DE); VOITLEIN, Ottmar, 91475 Lonnerstadt (DE)
(86) Internationale Anmeldenummer: PCT/DE2001/003472
(87) Internationale Veröffentlichungsnummer: WO 2002/027848

(56) Entgegenhaltungen:
- EP-A- 0 596 366
- PATENT ABSTRACTS OF JAPAN vol. 1995, no. 11, 26. Dezember 1995 (1995-12-26) & JP 07 230817 A (ISHIKAWAJIMA HARIMA HEAVY IND CO LTD), 29. August 1995 (1995-08-29)

## Beschreibung

Die Erfindung betrifft ein Verfahren zum Überwachen des Medienaustritts aus einer Brennstoffzelle und eine Brennstoffzellenanlage.

In einer Brennstoffzelle wird durch die Zusammenführung von Wasserstoff (H₂) und Sauerstoff (O₂) in einer elektrochemischen Reaktion elektrische Energie und Wärme erzeugt. Hierfür wird der Brennstoffzelle Wasserstoff und Sauerstoff entweder in ihrer reinen Form oder als Brenngas mit einem Wasserstoffanteil und als Luft zugeführt. Der Wasserstoff wird in einen Anodengasraum geleitet, wo er an einer Anode entlang streicht und aufgrund ihrer porösen Struktur durch sie hindurchdringen und an einen darunter liegenden Elektrolyten gelangen kann. Der Sauerstoff wird in einen Kathodengasraum geleitet, streicht dort an einer Kathode entlang und gelangt durch die poröse Struktur der Kathode ebenfalls an den unter der Kathode liegenden Elektrolyten, jedoch auf der dem Wasserstoff entgegengesetzten Seite des Elektrolyten. Auf der einen Seite des flächig ausgestalteten Elektrolyten befindet sich somit Wasserstoff und auf der anderen Seite des Elektrolyten Sauerstoff. Je nach Art des Elektrolyten kann nun Sauerstoff oder Wasserstoff den Elektrolyten durchdringen. Handelt es sich beispielsweise bei der Brennstoffzelle um eine PEM-Brennstoffzelle, wobei PEM die Abkürzung für Polymer-Elektrolyt-Membran oder Proton Exchange Membran ist, so kann der Wasserstoff durch den Elektrolyten hindurchdringen. Er reagiert mit dem Sauerstoff an der Kathode zu Wasser (H₂O), wobei elektrische Energie und Wärme frei werden.

Dieses im Kathodengasraum entstehende Wasser wird mit dem Gasstrom aus der Brennstoffzelle ausgetragen und in einem Wasserabscheider vom Gasstrom getrennt. Reicht der Gasstrom durch die Brennstoffzelle nicht aus, um das Wasser auszutragen, reichert sich das Wasser im Kathodengasraum der Brennstoffzelle an und flutet somit im Laufe der Zeit diese Zelle. Ähnliches gilt auch für den Anodengasraum der Brennstoffzellen, in denen sich Befeuchtungswasser anreichert, das dem Wasserstoff zu dessen Befeuchtung vor Eintritt in die Zellen beigefügt wird.

Aus der EP 0 596 366 B1 ist bekannt, dass Wasser durch eine Entwässerungsleitung aus der gefluteten Brennstoffzelle oder einem Wasserabscheider herauszuleiten. Dies geschieht, indem ein regelbares Ventil geöffnet wird, das Produktwasser aus der Brennstoffzelle herausfließt oder durch den in der Brennstoffzelle herrschenden Überdruck aus der Brennstoffzelle herausgedrückt wird und das Ventil wieder geschlossen wird. Hierbei besteht allerdings das Problem, dass bei einem defekten, nicht mehr schließenden Ventil Sauerstoff oder Wasserstoff in großem Umfang aus dem Brennstoffzellenblock austritt.

Es ist daher die Aufgabe der vorliegenden Erfindung, ein Verfahren zum Überwachen des Austritts von Gasen und Wasser - im Folgenden Medien genannt - aus einer Brennstoffzelle anzugeben, mit dem das Ausströmen unerwünschter Mengen eines Gases aus einer Brennstoffzelle wirksam verhindert werden kann. Außerdem ist es die Aufgabe der vorliegenden Erfindung, eine Brennstoffzellenanlage anzugeben, die eine Vorrichtung zur zuverlässigen Überwachung eines Medienaustritts durch eine Leitung aufweist.

Die auf das Verfahren gerichtet Aufgabe wird durch ein Verfahren zum Überwachen des Medienaustritts aus einer Brennstoffzelle gelöst, bei dem erfindungsgemäß nach einer Entwässerung der Brennstoffzelle durch eine Leitung die Leitung mittels eines Ventils verschlossen wird, mit Hilfe eines Mittels zum Messen des Differenzdrucks an einer Venturidüse die Strömung in der Leitung gemessen wird und bei einem Differenzdruck oberhalb eines Grenzdrucks die Brennstoffzelle abgeschaltet wird.

Eine Venturidüse wird durch eine Verengung im Querschnitt einer Leitung und eine anschließende gleichmäßige Erweiterung des Querschnitts gebildet. Eine Flüssigkeit oder ein Gas, das durch die Venturidüse strömt, wird beim Durchströmen des Abschnitts der Venturidüse, in dem sich der Leitungsquerschnitt verjüngt, beschleunigt, was zu einem Druckabfall innerhalb der Flüssigkeit oder des Gases an der engsten Stelle in der Venturidüse führt. Ein Differenzdrucksensor misst den Unterschied im Druck der Flüssigkeit oder des Gases vor und beispielsweise an der engsten Stelle der Venturidüse. Der Differenzdruck ist ein Maß für die Strömung der Flüssigkeit oder des Gases durch die Venturidüse.

Durch das Überwachen des Differenzdrucks ist somit feststellbar, wann ein Medium durch die Leitung strömt und wann nicht. Es ist somit auch feststellbar, ob und wann das Ventil die Entwässerungsleitung verschließt oder ob es, beispielsweise durch einen Defekt des Ventils, undicht ist oder gar nicht mehr schließt. Wird zu einem Zeitpunkt, zu dem das Ventil geschlossen sein sollte, ein Differenzdruck oberhalb eines Grenzdrucks gemessen, so kann davon ausgegangen werden, dass das Ventil nicht dicht oder überhaupt nicht geschlossen ist. Durch ein Abschalten der Brennstoffzelle oder des gesamten Brennstoffzellenblocks, zu der die Entwässerungsleitung zugehörig ist, wird ein unerwünschter Austritt von Gas aus der Brennstoffzelle bzw. dem Brennstoffzellenblock wirksam vermieden.

Die auf das Verfahren gerichtet Aufgabe wird außerdem durch ein Verfahren zum Überwachen des Medienaustritts aus einer Brennstoffzelle gelöst, bei dem erfindungsgemäß während einer Entwässerung der Brennstoffzelle durch Überwachung des Differenzdrucks an einer Venturidüse ein Wechsel von einem Wasserstrom zu einem Gasstrom durch die Venturidüse erkannt und eine Leitung mittels eines Ventils nach einem Gasdurchtritt geschlossen wird.

Eine Venturidüse ist nicht nur ein für eine Phase, beispielsweise Gase, geeigneter Strömungswächter. Mit Hilfe einer Venturidüse kann auch erkannt werden, wann die Brennstoffzelle entwässert ist und nachfolgend Gas durch die Entwässerungsleitung strömt. Zu dem Zeitpunkt, an dem eine Phasengrenze die Venturidüse passiert, beispielsweise von flüssig zu gasförmig, oder auch von gasförmig zu flüssig, vollzieht der Differenzdruck einen deutlichen Sprung. Anhand beispielsweise dieses Sprungs im Differenzdruck wird ein Phasenwechsel während der Entwässerung einer Brennstoffzelle eindeutig erkannt. Die Venturidüse fungiert somit im Zusammenspiel mit dem Differenzdrucksensor als ein Schließgeber für das Ventil. Ein Ausströmen unerwünschter Mengen an Gas durch die Entwässerungsleitung wird somit wirksam vermieden.

Zweckmäßigerweise wird das Ventil erst nach einer festgelegten Zeitspanne nach einem Gasdurchtritt geschlossen. In der Regel soll außer dem Produktwasser auch eine gewisse Menge an Inertgas aus der Brennstoffzelle abgeleitet werden. Deshalb wird der Zeitpunkt für das Schließen des Ventils auf eine festgelegte Zeitspanne nach dem Phasenwechsel festgelegt. Hierdurch wird beispielsweise zuerst das Produktwasser und dann eine gewisse Menge an Inertgas der Brennstoffzelle abgeführt, bevor das Ventil geschlossen wird. Außerdem wird durch die Venturidüse das zuverlässige Schließen des Ventils überwacht und die Brennstoffzelle bei einem Fehler des Ventils abgeschaltet. Die Länge der Zeitspanne kann beispielsweise konstant gewählt werden, so dass nach jedem Entwässern über einen konstanten Zeitraum Gas durch die Entwässerungsleitung aus der Brennstoffzelle ausströmt. Die Zeitspanne kann jedoch auch in einer Abhängigkeit zur Wassermenge stehen, die die Brennstoffzelle während des Entwässerungsvorgangs verlässt. Die Wassermenge lässt sich berechnen aus dem Wasserstrom durch die Venturidüse, also aus dem Differenzdruck, und der Zeitdauer des Wasserstroms.

Die zweitgenannte Aufgabe wird durch eine Brennstoffzellenanlage gelöst, die erfindungsgemäß einen Brennstoffzellenblock mit einer Leitung aufweist, in der eine Venturidüse mit einem Differenzdrucksensor angeordnet ist.

Eine Venturidüse ist in Verbindung mit einem Differenzdrucksensor ein Strömungswächter, der dazu geeignet ist, die Strömung in einer Leitung zuverlässig aufzuzeigen. Ein unerwünschtes Durchtreten von Gas durch beispielsweise eine Entwässerungsleitung wird somit zuverlässig erkannt. Der Vorteil einer Venturidüse liegt insbesondere darin, dass sie unempfindlich gegen das Durchströmen eines Zweiphasengemisches ist. Üblicherweise herrschen in einem Brennstoffzellenblock einige Bar Überdruck gegenüber der äußeren Atmosphäre. Wasser und Gas werden somit mit großer Geschwindigkeit durch die Venturidüse gedrückt. Es hat sich herausgestellt, dass andere Strömungswächter, wie beispielsweise ein Schwebekörper-Strömungswächter, sehr schnell in Mitleidenschaft gezogen werden, wenn sie mit hoher Geschwindigkeit von einem Zweiphasengemisch durchströmt werden. Wird beispielsweise ein Schwebekörper-Strömungswächter für eine kurze Zeit von Gas und anschließend von Wasser durchströmt, so wird der Schwebekörper durch den Aufprall des Wassers so heftig bewegt, dass dies nach kurzen Betriebszeiten zu einer Zerstörung des Strömungswächters führt. Eine Venturidüse ist insbesondere dadurch, dass sie keine beweglichen Teile aufweist, verschleißfrei und besonders geeignet für die Überwachung von Strömung in einem Zweiphasengemisch. Außerdem arbeitet sie ohne dynamische Rückkopplung.

Neben der Robustheit weist die Venturidüse außerdem die Eigenschaft auf, dass mit ihr auch außerordentlich kleine Ströme detektiert werden. Dies ist auch auf die Differenzdruck vergrößernde Funktion der Venturidüse zurückzuführen: Der Differenzdruck zwischen dem Druck vor der Düse und dem Druck an der engsten Stelle der Düse ist größer als der Differenzdruck zwischen dem Druck vor der Düse und dem Druck hinter der Düse. Somit können mit Hilfe einer Venturidüse auch kleine Undichtigkeiten im Verschlussventil für die Entwässerungsleitung bemerkt werden.

Außerdem weist eine Venturidüse gegenüber anderen Strömungswächtern weitere Vorzüge auf: Sie erzeugt nur einen geringen Gegendruck in der Entwässerungsleitung durch Rückgewinnung der kinetischen Energie innerhalb der Düse. Sie arbeitet daher ohne großen Druckverlust. Außerdem kann eine Venturidüse sehr verschiedene Strömungen aushalten oder sogar messen. Sie ist sehr überlastsicher. Ist der Differenzdrucksensor einer Venturidüse beispielsweise zur Messung geringer Strömungen ausgelegt, die einen Differenzdruck von 10 mbar erzeugen, so kann der Sensor dennoch Druckschlägen von beispielsweise 4 bar standhalten.

Vorteilhafterweise ist die Leitung eine Entwässerungsleitung. Hierdurch wird eine zuverlässige Überwachung der Entwässerung einer Brennstoffzelle ohne ungewünscht viel Gasaustritt erreicht.

Alternativ ist die Leitung eine Betriebsgasleitung. Selbstverständlich ist eine Venturidüse auch in anderen Leitungen als nur der Entwässerungsleitung innerhalb einer Brennstoffzellenanlage einsetzbar. Eine Venturidüse kann beispielsweise in die Betriebsgaszuleitung zu einem Brennstoffzellenblock eingebaut werden. Mit Hilfe eines Differenzdrucksensors kann somit der Betriebsgasstrom überwacht und optimal eingestellt werden. Außerdem kann eine Venturidüse in die Abströmleitung für Abgas oder Inertgas aus dem Brennstoffzellenblock eingebaut werden. Es ist somit eine Messung möglich, wie viel Gas aus dem Brennstoffzellenblock austritt. Mit Hilfe dieser Messung kann der Betriebsmodus des Brennstoffzellenblocks optimiert werden. Eine Venturidüse ist auch geeignet für den Einbau zwischen einzelne Kaskadenstufen eines kaskadierten Brennstoffzellenblocks. Hierdurch kann der Brenngasverbrauch der einzelnen Kaskadenstufen bestimmt und der Betriebsmodus des Brennstoffzellenblocks entsprechend angepasst werden.

In vorteilhafter Ausgestaltung der Erfindung ist der Brennstoffzellenblock ein geschlossener Brennstoffzellenblock. Ein solcher Block wird auch "dead end Block" genannt. Ein geschlossener Brennstoffzellenblock zeichnet sich dadurch aus, dass er für den im wesentlichen abgasfreien Betrieb mit reinem Wasserstoff (H₂) und reinem Sauerstoff (O₂) ausgelegt ist. Wasserstoff und Sauerstoff werden im Hindurchtritt durch die Brennstoffzellen vollständig verbraucht und zu Wasser umgesetzt. Ein solcher Brennstoffzellenblock hat somit keine Abgasleitung, sondern nur eine oder mehrere Entwässerungsleitungen, durch die Produktwasser und Befeuchtungswasser sowie auch eine gewisse Menge Restgase wie Inert- und Verschmutzungsgase aus den Wasserstoff- und Sauerstoffgasen aus dem Block abgeführt werden. Ein solcher Brennstoffzellenblock ist also so ausgelegt, dass ihn nur wenig Gas verlässt. Daher ist eine besonders genaue Regelung der Entwässerung und der Entsorgung der Restgase besonders wichtig. Durch die Funktion der Venturidüse als Schließgeber und als Ventilüberwachung kann eine solche Regelung mit Hilfe der Venturidüse einfach und zuverlässig durchgeführt werden.

Vorteilhafterweise kann die Erfindung generell in allen Brennstoffzellenanlagen zum Einsatz kommen. Besonders vorteilhaft ist sie bei Niedertemperatur-Brennstoffzellen wie beispielsweise PEM-Brennstoffzellen (Polymer Elektrolyt Membrane) und dort besonders im mobilen Bereich wie in Kraftfahrzeugen oder anderen Fahrzeugen. So findet die Erfindung in besonders vorteilhafter Weise Anwendung in einer Brennstoffzellenanlage für die Stromversorgung eines elektrischen Aggregats in einem Unterseeboot. Es werden ganz besondere Anforderungen an eine Brennstoffzellenanlage in einem Unterseeboot gestellt. So darf z.B. eine solche Brennstoffzellenanlage nur extrem wenig Abgase abgeben, weil diese nicht das U-Boot verlassen, sondern im U-Boot verbleiben. Daher ist eine sehr sichere Überwachung der Austrittsmenge an Gas durch eine Entwässerungsleitung aus einem Brennstoffzellenblock zwingend notwendig. Der sichere, verschleißfreie und zuverlässige Betrieb macht eine Venturidüse daher besonders geeignet für einen Einsatz in einem U-Boot. Eine zweite besondere Anforderung an eine Brennstoffzellenanlage in einem U-Boot ist, dass sie extrem geräuscharm arbeiten muss. Ein Strömungswächter mit beweglichen Teilen erzeugt zwangsläufig in einem Zweiphasengemisch, das mit hoher Geschwindigkeit durch den Strömungswächter gepresst wird, klickernde Geräusche. Es lässt sich nicht vermeiden, dass solche Geräusche auch auf die Außenhaut des U-Boots übertragen werden. Sie sind dann mit speziellen Geräten auf U-Jagdbooten identifizierbar: Das U-Boot ist somit ortbar. Da eine Venturidüse keine beweglichen Teile hat und auch keine besonderen turbulenten Strömungen im Zweiphasengemisch erzeugt, funktioniert sie ohne klickende oder gurgelnde Geräusche. Mit ihr ist somit eine geräuschlose Überwachung des Brennstoffzellenblocks durchführbar.

Ein weiterer Vorteil wird erzielt, wenn das Aggregat ein Antriebsaggregat des U-Boots ist. Eine Brennstoffzellenanlage, die als Stromversorgung für ein Antriebsaggregat des U-Boots dient, muss eine große Leistung aufweisen. Sie erzeugt somit viel Produktwasser. Da eine Venturidüse unabhängig von ihrer Größe immer geräuschfrei, exakt und verschleißfrei arbeitet, auch unabhängig von der Menge des sie durchtretenden Wassers, ist sie besonders geeignet für den Einsatz in großen Brennstoffzellenanlagen eines Unterseeboots.

Zweckmäßigerweise weist die Brennstoffzellenanlage PEM-Brennstoffzellen auf. In solchen Brennstoffzellen zirkuliert viel Wasser, da der Elektrolyt einer jeden Brennstoffzelle feucht gehalten werden muss. Außerdem wird sie bei niedrigen Temperaturen bis 100 °C und bei Drücken bis zu 5 Bar betrieben.

Alle diese Betriebsbedingungen sind solcher Art, dass die Venturidüse ihre Vorteile voll ausspielen kann. Bei einer PEM-Brennstoffzelle wird das Produktwasser auf der Kathodenseite erzeugt. Daher kommt die Venturidüse bevorzugt auf der Kathodenseite eines PEM-Brennstoffzellenblocks zum Einsatz.

Wasser fällt jedoch auch auf der Anodenseite an, da auch der Wasserstoff, ebenso wie der Sauerstoff, vor Eintritt in die Brennstoffzellen zu 100% befeuchtet wird. Dieses Wasser kondensiert unter Umständen aus und kann daher auch die Anodenseite einer Brennstoffzelle fluten. Daher ist der Einsatz einer Venturidüse auch für die Entwässerung des Anodenteils eines Brennstoffzellenblocks anzuraten, da auch dort ein Zweiphasengemisch vorliegt, das aus dem Brennstoffzellenblock ausgeleitet werden muss.

Ausführungsbeispiele der Erfindung werden anhand von drei Figuren näher erläutert. Es zeigen:
- FIG 1: eine schematische Darstellung einer Brennstoffzellanlage mit einer Venturidüse in einer Entwässerungsleitung,
- FIG 2: eine schematische Darstellung einer Venturidüse mit angeschlossenem Differenzdrucksensor,
- FIG 3: ein Verfahrens-Fließbild für die Entsorgung von Wasser und Inertgas aus einem Brennstoffzellenblock.

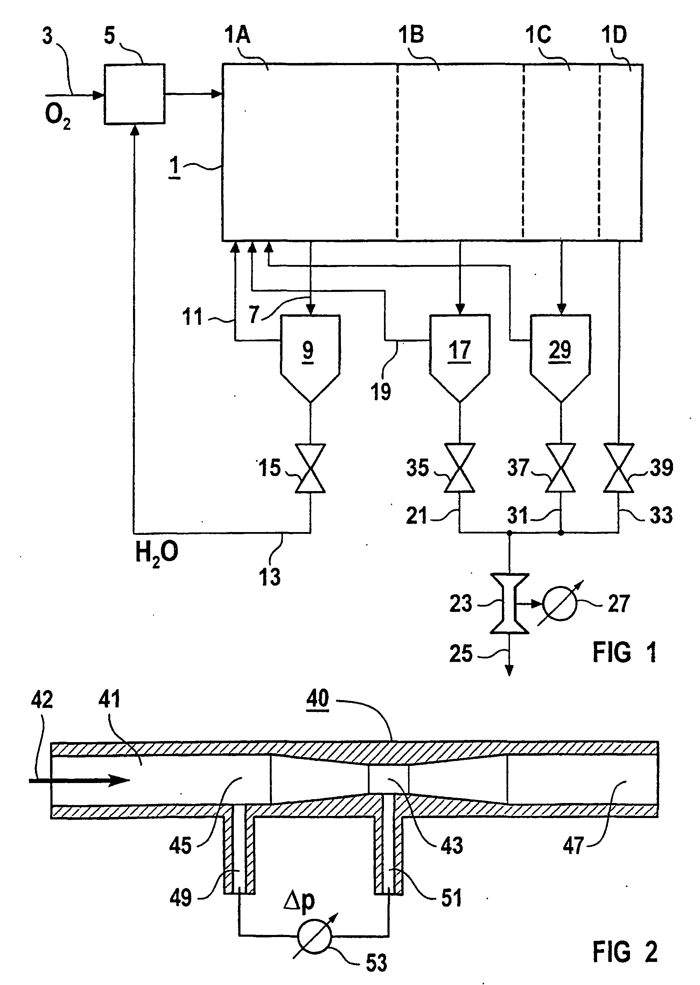

Figur 1 zeigt einen kaskadierten Brennstoffzellenblock 1, der in drei Kaskadenstufen 1A, 1B und 1C eingeteilt ist und der eine sogenannte "Spülzelle" 1D aufweist. Der Brennstoffzellenblock 1 ist ein sogenannter geschlossener oder "dead end"-Brennstoffzellenblock, der für einen im wesentlichen abgasfreien Betrieb ausgelegt ist. Der Brennstoffzellenblock umfasst PEM-Brennstoffzellen und dient als Stromversorgung für einen Antriebsmotor eines Unterseebootes.

Während des Betriebs des Brennstoffzellenblocks 1 wird Sauerstoff (O₂) durch die Leitung 3 einem Befeuchter 5 zugeführt, der als ein Flächenbefeuchter ausgeführt ist. Der befeuchtete Sauerstoff wird dann in die erste Kaskadenstufe 1A des Brennstoffzellenblocks 1 geleitet. Dort durchläuft er eine Anzahl von PEM-Brennstoffzellen. Das Produktwasser (H₂O) aus der ersten Kaskadenstufe 1A wird durch die Leitung 7 einem Wasserabscheider 9 zugeführt. In dem Wasserabscheider 9 werden Wasser und Sauerstoff separiert. Der Sauerstoff wird über die Leitung 11 in die erste Kaskadenstufe 1A zurückgespeist. Das Wasser wird durch die Leitung 13 zum Befeuchter 5 zurückgeführt. In der Leitung 13 ist ein Ventil 15 zum Absperren der Leitung 13 angeordnet.

Im weiteren Verlauf fließt der Sauerstoff aus der Kaskadenstufe 1A in die Kaskadenstufe 1B, die wiederum mehrere PEM-Brennstoffzellen umfasst. Das sich in der Kaskadenstufe 1B ansammelnde Wasser wird in einen Wasserabscheider 17 geleitet, in dem Wasser und Sauerstoff getrennt werden. Der Sauerstoff wird durch die Leitung 19 in die erste Kaskadenstufe 1A rückgeführt und das Wasser wird durch die Leitung 21 zu einer Venturidüse 23, durch diese hindurch und mittels der Entwässerungsleitung 25 zur weiteren Verwendung abgeführt. An die Venturidüse 23 angeschlossen ist ein Differenzdrucksensor 27. Das sich in der dritten Kaskadenstufe 1C ansammelnde Wasser wird in den Wasserabscheider 29 geleitet, der durch die Leitung 31 ebenfalls mit der Venturidüse 23 verbunden ist. In der Spülzelle 1D sammeln sich während des Betriebs des Brennstoffzellenblocks 1 Wasser, Inert- und Verschmutzungsgase. Sie werden durch die Leitung 33 ebenfalls zur Venturidüse 23 geführt.

Wenn eine Entwässerung der Wasserabscheider 17 oder 29 oder der Spülzelle 1D nötig ist, öffnet das Ventil 35, 37 bzw. 39, so dass das Wasser aus den Wasserabscheidern 17 oder 29 oder Wasser aus der Spülzelle zusammen mit Inert- und Verschmutzungsgas durch das jeweilige Ventil 35, 37, 39 und die Venturidüse 23 strömt. Mit Hilfe des Differenzdrucksensors 27 wird nun überwacht, welche Phase durch die Venturidüse strömt. Ist Gas in ausreichendem Umfang durch die Venturidüse 23 geströmt, so veranlasst eine in Figur 1 nicht näher dargestellte Überwachungselektronik, die mit dem Differenzdrucksensor und den Ventilen 35, 37 und 39 verbunden ist, das Schließen des gerade geöffneten Ventils.

In dem Fall, dass alle Ventile 15, 35, 37, 39 geschlossen sein sollten und der Differenzdrucksensor 27 für eine Zeitspanne, die länger als eine Grenzzeitspanne ist, einen Differenzdruck oberhalb eines Grenzdrucks signalisiert, so veranlasst die Überwachungselektronik das Abschalten des Brennstoffzellenblocks 1. Der Grenzdruck beträgt 10 mbar. Die Grenzzeitspanne beträgt 3 sek. Da die Brennstoffzellenanlage, deren Bestandteil der Brennstoffzellenblock 1 ist, zur Stromversorgung eines elektrischen Antriebsaggregats eines Unterseeboots dient, wirken Beschleunigungskräfte auf den Differenzdrucksensor 27. In den Leitungen von der Venturidüse 23 zum Differenzdrucksensor 27 schwappt immer etwas Wasser, mal mehr, mal weniger, so dass eine Beschleunigung des Differenzdrucksensors 27 einen Differenzdruck in der Venturidüse simuliert. Erfahrungen haben gezeigt, dass dieser Differenzdruck unter etwa 5 mbar liegt. Stärkere Beschleunigungen oder Messfehler führen für einen kurzen Zeitraum auch zu Differenzdrücken oder zur Simulation von Differenzdrücken oberhalb 10 mbar. Daher wartet die Überwachungselektronik eine Grenzzeitspanne von 3 sek ab, in der der Differenzdruck über 10 mbar betragen muss, bevor die Überwachungselektronik den Brennstoffzellenblock 1 abschaltet.

Figur 2 zeigt eine Venturidüse 40, die in einer Entwässerungsleitung 41 eines Brennstoffzellenblocks angeordnet ist. Während des Betriebs des Brennstoffzellenblocks fließt bei geöffnetem Absperrventil innerhalb der Entwässerungsleitung 41 ein Flüssigkeits- oder Gasstrom in Strömungsrichtung 42. Der Strom wird vor der Zone 43 engsten Querschnitts beschleunigt. Innerhalb der Zone 43 fließt das Gas oder die Flüssigkeit mit erhöhter Geschwindigkeit, was dazu führt, dass der gemessene oder auch "statische" Druck in der Zone 43 niedriger ist, als der Druck in der Zone 45 vor der Verjüngung der Venturidüse 40. Leitungen 49 und 51 führen von der Zone 45 bzw. 43 zu einem Differenzdrucksensor 53. Dieser Differenzdrucksensor 53 misst den Differenzdruck zwischen den Drücken des Gases oder der Flüssigkeit in der Zone 45 und 43. Der Differenzdrucksensor 53 ist für einen Druck bis maximal 4 Bar ausgelegt. Der Messbereich des Differenzdrucksensors 53 geht von 0 bis 1 bar. Besonders empfindlich und damit besonders genau misst der Differenzdrucksensor 53 im Bereich zwischen 0 und 100 mbar. Durch eine geeignete Ausgestaltung der Zone 43 (beispielsweise 5% der in der Zone 45 durchstömten Querschnittsfläche) wird erreicht, dass während einer bestimmten Sicherheitszeitspanne, beispielsweise den 3 sek, nicht sehr viel Gas durch die enge Zone 43 treten kann. Hierdurch wird verhindert, dass in egal welchem Fall Gas in bedeutendem Umfang durch die Venturidüse hindurchtritt.

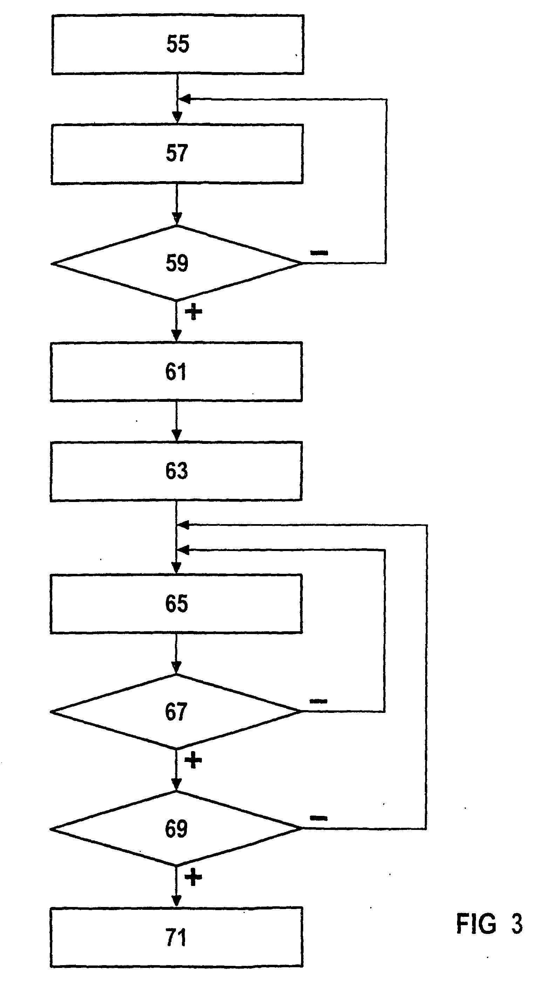

Figur 3 zeigt ein Flussbilddiagramm eines Verfahrens zum Überwachen des Medienaustritts aus einer Brennstoffzelle. In einem ersten Verfahrensschritt 55 wird ein Entwässerungsventil der Brennstoffzelle geöffnet. Anschließend fließt Wasser durch eine Venturidüse in der Entwässerungsleitung, gleichzeitig wird der Differenzdruck in der Venturidüse von einem Differenzdrucksensor gemessen 57 und an eine Überwachungselektronik weitergegeben. Die Überwachungselektronik überprüft 59, ob im zeitlichen Verlauf des Differenzdrucks Sprünge in vorgegebener Art sind. Ein solcher Sprung ist ein Indiz, dass ein Phasenübergang flüssig-gasförmig die Venturidüse passiert. Ist kein solcher Sprung aufgetreten (-), wird der Differenzdruck weiter gemessen und an die Überwachungselektronik weitergegeben 57. Ist ein solcher Sprung festgelegter Art aufgetreten (+), so wird von der Überwachungselektronik eine vorprogrammierte Zeit gewartet 61, bis ein Signal zum Schließen des Entwässerungsventils gegeben wird 63.

Der Differenzdruck wird vom Differenzdrucksensor weiter gemessen und der Messwert an die Überwachungselektronik weitergegeben 65. Diese überprüft den Messwert auf seine Größe hin 67. Liegt der Wert unterhalb einer vorprogrammierten Schwelle (-), wird der Differenzdruck weiter gemessen und an die Überwachungselektronik gegeben 65. Liegt der Wert oberhalb der Schwelle (+), überprüft die Überwachungselektronik den zeitlichen Verlauf des Differenzdrucks 69. Liegt ein unkritischer Verlauf vor (-), beispielsweise trat der Differenzdruck nur kurzfristig über die Schwelle, wird der Differenzdruck weiter gemessen und an die Überwachungselektronik weitergegeben 65. Liegt ein kritischer Verlauf vor (+), so gibt die Überwachungselektronik ein Signal 71 zum Abschalten der Brennstoffzellenanlage.

## Patentansprüche

1. Verfahren zum Überwachen des Medienaustritts aus einer Brennstoffzelle (1D), bei dem nach einer Entwässerung der Brennstoffzelle (1D) durch eine Leitung (25,33) die Leitung (25,33) mittels eines Ventils (39) verschlossen wird (63), mit Hilfe eines Mittels zum Messen des Differenzdrucks (27,53) an einer Venturidüse (23,40) die Strömung in der Leitung (25,33) gemessen wird (65) und bei einem Differenzdruck oberhalb eines Grenzdrucks die Brennstoffzelle abgeschaltet wird (71).

2. Verfahren zum Überwachen des Medienaustritts aus einer Brennstoffzelle (1D), bei dem während einer Entwässerung der Brennstoffzelle (1D) durch Überwachung (57) des Differenzdrucks an einer Venturidüse ein Wechsel von einem Wasserstrom zu einem Gasstrom durch die Venturidüse (23,40) erkannt (59) und eine Leitung (25,33) mittels eines Ventils (39) nach einem Gasdurchtritt geschlossen wird (63).

3. Verfahren nach Anspruch 2, bei dem das Ventil nach einer festgelegten Zeitspanne (61) nach einem Gasdurchtritt geschlossen wird (63).

4. Brennstoffzellenanlage mit einem Brennstoffzellenblock (1) und einer Leitung (25,41),
**gekennzeichnet durch** eine in der Leitung (25,41) angeordnete Venturidüse (23,40) mit einem Differenzdrucksensor (27,53).

5. Brennstoffzellenanlage nach Anspruch 4,
**dadurch gekennzeichnet, dass** die Leitung eine Entwässerungsleitung (25, 41) ist.

6. Brennstoffzellenanlage nach Anspruch 4,
**dadurch gekennzeichnet, dass** die Leitung eine Betriebsgasleitung ist.

7. Brennstoffzellenanlage nach einem der Ansprüche 4 bis 6,
**dadurch gekennzeichnet, dass** der Brennstoffzellenblock (1) ein geschlossener Brennstoffzellenblock (1) ist.

8. Brennstoffzellenanlage nach einem der Ansprüche 4 bis 7 als Stromversorgung für ein elektrisches Aggregat in einem Unterseeboot.

9. Brennstoffzellenanlage nach Anspruch 8,
**dadurch gekennzeichnet, dass** das Aggregat ein Antriebsaggregat des Unterseeboots ist.

10. Brennstoffzellenanlage nach einem der Ansprüche 4 bis 9 mit PEM-Brennstoffzellen.

## Claims

1. Method for monitoring the discharge of media out of a fuel cell (1D), in which, after the fuel cell (1D) has been drained through a line (25, 33), the line (25, 33) is closed (63) by means of a valve (39), the flow in the line (25, 33) is measured (65) with the aid of a means for measuring the differential pressure (27, 53) at a venturi nozzle (23, 40), and, if the differential pressure is above a limit pressure, the fuel cell is shut down (71).

2. Method for monitoring the discharge of media out of a fuel cell (1D), in which, while the fuel cell (1D) is being drained, a change from a stream of water to a stream of gas through a venturi nozzle (23, 40) is detected (59) by monitoring (57) the differential pressure at the venturi nozzle, and a line (25, 33) is closed (63) by means of a valve (39) after gas has started to pass through it.

3. Method according to Claim 2, in which the valve is closed (63) a fixed period of time (61) after gas has started to pass through it.

4. Fuel cell system having a fuel cell block (1) and a line (25, 41), **characterized by** a venturi nozzle (23, 40) with a differential pressure sensor (27, 53) arranged in the line (25, 41).

5. Fuel cell system according to Claim 4, **characterized in that** the line is a drainage line (25, 41).

6. Fuel cell system according to Claim 4, **characterized in that** the line is an operating-gas line.

7. Fuel cell system according to one of Claims 4 to 6, **characterized in that** the fuel cell block (1) is a closed fuel cell block (1).

8. Fuel cell system according to one of Claims 4 to 7 as power supply for an electrical unit in a submarine.

9. Fuel cell system according to Claim 8, **characterized in that** the unit is a drive unit of the submarine.

10. Fuel cell system according to one of Claims 4 to 9 having PEM fuel cells.

## Revendications

1. Procédé de contrôle de la sortie de fluides d'une pile (1D) à combustible, dans lequel, après une déshydratation de la pile (1D) à combustible par un conduit (25, 33), on ferme (63) le conduit (25, 33) au moyen d'une vanne (39), on mesure (65) à l'aide d'un moyen de mesure de la différence (27, 53) de pression sur une buse (23, 40) à venturi le courant dans le conduit (25, 33), et si la différence de pression est supérieure à une pression limite, on arrête (71) la pile à combustible.

2. Procédé de contrôle de la sortie de fluides d'une pile (1D) à combustible, dans lequel, pendant une déshydratation de la pile (1D) à combustible, on reconnaît (59), en contrôlant (57) la différence de pression sur une buse à venturi, un remplacement d'un courant d'eau par un courant de gaz dans la buse (23, 40) à venturi et on ferme (63) un conduit (25, 33) au moyen d'une vanne (39) après un passage de gaz.

3. Procédé suivant la revendication 2, dans lequel on ferme (63) la vanne après un laps de temps (61) fixé après un passage de gaz.

4. Installation de piles à combustible comprenant un empilement (1) de piles à combustible et un conduit (25, 41),
**caractérisée par** une buse (23, 40) à venturi montée dans le conduit (25, 41) et ayant un capteur (27, 53) de différence de pression.

5. Installation de piles à combustible suivant la revendication 4,
**caractérisée en ce que** le conduit est un conduit (25, 41) de déshydratation.

6. Installation de piles à combustible suivant la revendication 4,
**caractérisée en ce que** le conduit est un conduit pour du gaz de fonctionnement.

7. Installation de piles à combustible suivant l'une des revendications 4 à 6,
**caractérisée en ce que** l'empilement (1) de piles à combustible est un empilement (1) fermé de piles à combustible.

8. Installation de piles à combustible suivant l'une des revendications 4 à 7, servant d'alimentation en courant d'un groupe électrique dans un sous-marin.

9. Installation de piles à combustible suivant la revendication 8,
**caractérisée en ce que** le groupe est un groupe de propulsion du sous-marin.

10. Installation de piles à combustible suivant l'une des revendications 4 à 9, ayant des piles à combustible PEM.
